(19) Europäisches Patentamt
European Patent Office
Office européen des brevets

(11) Publication number : **0 527 706 A1**

# (12) EUROPEAN PATENT APPLICATION

(21) Application number : **92810598.0**

(22) Date of filing : **05.08.92**

(51) Int. Cl.$^5$ : **C09J 163/00,** C08L 63/00,
// (C09J163/00, 147:00),
(C09J163/00, 179:02)

(30) Priority : **12.08.91 US 744617**

(43) Date of publication of application :
**17.02.93 Bulletin 93/07**

(84) Designated Contracting States :
**CH DE ES FR GB IT LI NL SE**

(71) Applicant : **CIBA-GEIGY AG**
**Klybeckstrasse 141**
**CH-4002 Basel (CH)**

(72) Inventor : **Wongkamolsesh, Kachorn**
**30 Foxboro Drive**
**Rochester Hills, MI 48309 (US)**

## (54) High performance epoxy adhesive composition with high flexibility and toughness.

(57) The present invention relates to a two component epoxy resin adhesive system comprising :
(A) an epoxy component comprising
(a) at least one aromatic multifunctional epoxy resin, and
(B) a liquid elastomer component comprising
(a) a liquid copolymer based on butadiene and at least one ethylenically unsaturated comonomer,
(b) a liquid oligomer reaction product of a polyamine and a dimer acid and
(c) a liquid aromatic or aliphatic polyamine,
which exhibits a combination of high glass transition temperature (Tg), flexibility, fast curing, chemical thixotropy, high temperature resistance and excellent adhesion.

EP 0 527 706 A1

The present invention relates to an epoxy resin composition which exhibits a combination of high glass transition temperature (Tg), flexibility, fast curing, chemical thixotropy, high temperature resistance and excellent adhesion.

Conventional epoxy resin adhesives exhibit limited flexibility which limits their suitability for use in a variety of applications where flexibility is essential, for example, in automotive applications. State-of-the-art urethanes exhibit good flexiblity but are defficient in high temperature performance.

A number of methods for improving flexibility have been described in the art. For example, DE 2,158,878 employs a mixture of a polyamide-amine and 1,4-cispolybutadiene as a hardener and in DE 2,216,786 a mixture of polyamine-amine and polychloroprene is used as the hardener.

U.S. Patent No. 4,447,579 describes a room temperature curable epoxy resin adhesive comprising an epoxy resin and a polyamine-amine hardener which is obtained by reaction of a diene rubber having terminal carboxy groups with the reaction product of an aliphatic polyamine and one or two compounds containing carboxyl groups selected from tall acid and polymerized fatty acid.

It is a primary object of the present invention to provide a two part epoxy adhesive system which exhibits a combination of high glass transition temperature (Tg), flexibility, fast curing, chemical thixotropy, high temperature resistance and excellent adhesion.

It is a further object of the present invention to provide cured compositions useful as coatings, sealants and adhesives.

Further objects and advantages of the present invention will become apparent from the following descriptive material and illustrative examples.

The present invention relates to a two component epoxy resin adhesive system comprising:

(A) an epoxy component comprising

(a) at least one aromatic multifunctional epoxy resin, and

(B) a liquid elastomer component comprising

(a) a liquid copolymer based on butadiene and at least one ethylenically unsaturated comonomer,

(b) a liquid oligomer reaction product of a polyamine and a dimer acid and

(c) a liquid aromatic or aliphatic polyamine.

Suitable aromatic multifunctional epoxy resins for use in the epoxy resin component are virtually all aromatic epoxy resins containing on average at least two 1,2-epoxy groups per molecule.

Illustrative examples of such aromatic multifunctional epoxy resins are:

Polyglycidyl and poly(β-methylglycidyl) ethers which may be obtained by reacting a compound containing at least two phenolic hydroxyl groups in the molecule with epichlorohydrin, glycerol dichlorohydrin or with β-methyl epichlorohydrin under alkaline conditions or in the presence of an acid catalyst, and subsequent treatment with an alkali. Illustrative of compounds containing at least two phenolic hydroxyl groups in the molecule are alcohols containing aromatic groups such as N,N-bis(2-hydroxyethyl)aniline or p,p′-bis(2-hydroxyethylamino)diphenylmethane; or mono- or polynuclear polyphenols such as resorcinol, hydroquinone, bis(4-hydroxyphenyl)methane,

2,2-bis(4-hydroxyphenyl)propane, brominated 2,2-bis(4-hydroxyphenyl)propane, bis(4-hydroxyphenyl) ether, bis(4-hydroxyphenyl)sulfone,

1,1,2,2-tetrakis(4-hydroxyphenyl) ethane or novolaks which are obtainable by condensation of aldehydes such as formaldehyde, acetaldehyde, chloral or furfuraldehyde with phenols or alkyl- or halogen-substituted phenols such as phenol, the above described bisphenols, 2- or 4-methylphenol, 4-tert-butylphenol, p-nonylphenol or 4-chlorophenol.

Poly(N-glycidyl) compounds which may be obtained by dehydrochlorinating the reaction products of epichlorohydrin with amines which contain at least two amino hydrogen atoms. Amines from which these epoxy resins are derived are, typically, aromatic amines such as aniline, p-toluidine, bis(4-aminophenyl) methane, bis(4-aminophenyl) ether, bis(4-aminophenyl)sulfone, 4,4′-diaminobiphenyl or 3,3′-diaminobiphenyl; or araliphatic amines such as m-xylylenediamine.

Poly(S-glycidyl) derivatives, for example bis(S-glycidyl) derivatives which are derived from bis(4-mercaptomethylphenyl) ether.

It is also possible, however, to use epoxy resins in which the 1,2-epoxy groups are attached to different hetero atoms or functional groups. These compounds, comprise, for example, the N,N,O-triglycidyl derivative of 4-aminophenol, the N,N,O-triglycidyl derivative of 3-aminophenol or the glycidyl ether/glycidyl ester of salicylic acid.

Preferred aromatic multifunctional epoxy resins include N,N,O-triglycidyl-4-aminophenol, N,N,N′,N′-tetraglycidyl derivative of methylene dianiline, epoxidized novolaks, epoxidized bisphenol A resins, epoxidized resorcinol and epoxidized bisphenol F. Most preferably, the epoxidation products of cresol novolacs and phenol novolacs of varying molecular weight is used. The preparation of such materials is well known in the art.

The aromatic multifunctional epoxy resin is present in a range of from about 50 to 100 wt%, preferably about 60 to about 90 wt%, most preferably about 65 to about 85 wt% based upon the total weight of the epoxy component.

Additionally, the epoxy resin component may further contain an aliphatic multifunctional epoxy resin. Suitable aliphatic multifunctional epoxy resins for use in the epoxy resin component are virtually all aliphatic epoxy resins containing on average at least two 1,2-epoxy groups per molecule.

Illustrative examples of such aliphatic multifunctional epoxy resins are:

Polyglycidyl and poly(β-methylglycidyl) esters which may be obtained by reacting a compound containing at least two carboxyl groups in the molecule with epichlorohydrin, glycerol dichlorohydrin or with β-methylepichlorohydrin in the presence of a base. Illustrative of compounds containing at least two carboxyl groups in the molecule are saturated aliphatic dicarboxylic acids such as adipic acid or sebacic acid; or unsaturated aliphatic dicarboxylic acids such as maleic acid; or aromatic dicarboxylic acids such as phthalic acid, isophthalic acid or terephthalic acid; or copolymers of (meth)acrylic acid with copolymerizable vinyl monomers such as the 1:1 copolymers of methacrylic acid with styrene or with methylmethacrylate.

Polyglycidyl and poly(β-methylglycidyl) ethers which may be obtained by reacting a compound containing at least two alcoholic hydroxyl groups in the molecule with epichlorohydrin, glycerol dichlorohydrin or with β-methyl epichlorohydrin under alkaline conditions or in the presence of an acid catalyst, and subsequent treatment with an alkali. Illustrative of compounds containing at least two alcoholic hydroxyl groups in the molecule are aliphatic alcohols such as ethylene glycol, diethylene glycol and higher poly(oxyethylene) glycols, 1,2-propanediol, 1,3-propanediol or poly(oxypropylene) glycols, 1,4-butanediol or poly(oxybutylene)glycols, 1,5-pentanediol, neopentyl glycol (2,2-dimethylpropanediol), 1,6-hexanediol, 1,8-octanediol, 1,10-decanediol or 1,12-dodecanediol; 2,4,6-hexanetriol, glycerol, 1,1,1-trimethylolethane, 1,1,1-trimethylolpropane, pentaerythritol, sorbitol or polyepichlorohydrins; or cycloaliphatic alcohols such as 1,3- or 1,4-dihydroxy-cyclohexane, 1,4-cyclohexanedimethanol, bis(4-hydroxycyclohexyl)methane, 2,2-bis-(4-hydroxycyclohexyl)propane or 1,1-bis(hydroxymethyl)cyclohex-3-ene;

Poly(N-glycidyl) compounds which may be obtained by dehydrochlorinating the reaction products of epichlorohydrin with amines which contain at least two amino hydrogen atoms. Amines from which these epoxy resins are derived are, typically, aliphatic amines such as hexamethylenediamine or n-butylamine.

Included among the poly(N-glycidyl) compounds are also triglycidyl isocyanurate, N,N′-diglycidyl derivatives of cycloalkyleneureas, for example of ethyleneurea or of 1,3-propyleneurea, and N,N′-diglycidyl derivatives of hydantoins, for example of 5,5-dimethylhydantoin.

Poly(S-glycidyl) derivatives, for example bis(S-glycidyl) derivatives which are derived from dithiols such as 1,2-ethanedithiol.

Cycloaliphatic epoxy resins or epoxidation products of dienes or polyenes, such as cycloaliphatic epoxy resins which may be prepared by epoxidation of ethylenically unsaturated cycloaliphatic compounds. Illustrative of such compounds are 1,2-bis(2,3-epoxycyclopentyloxy)ethane, 2,3-epoxycyclopentyl glycidyl ether, diglycidyl esters of cyclohexane-1,2-dicarboxylic acid, 3,4-epoxycyclohexyl glycidyl ether, bis(2,3-epoxycyclopentyl) ether, bis(3,4-epoxycyclohexyl)ether, 5(6)-glydiyl-2-(1,2-epoxyethyl)-bicyclo[2.2.1]heptane, dicyclopentadiene dioxide, cyclohexa- 1,3-diene dioxide, 3,4-epoxy-6-methylcyclohexylmethyl-3′,4′-epoxy-6′-methylcyclohexanecarboxylate or 3,4-epoxycyclohexylmethyl-3′,4′-epoxycyclohexanecarboxylate.

It is also possible, however, to use epoxy resins in which the 1,2-epoxy groups are attached to different hetero atoms or functional groups. These compounds comprise, for example, N-glycidyl-N′-(2-glycidyloxypropyl)-5,5-dimethylhydantoin or 2-glycidyloxy-1,3-bis-(5,5-dimethyl-1-glycidylhydantoin-3-yl)propane.

Preferred aliphatic multifunctional epoxy resins include diglycidylesters of cyclohexane-1,2-dicarboxylic acid, trimethylol ethane triglycidyl ether and trimethylol propane triglycidyl ether. Most preferably trimethylol propane triglycidyl ether is used.

The aliphatic multifunctional epoxy resin may be present in a range of from about 5 to about 30 wt%, preferably about 5 to about 20 wt% based upon the total weight of the epoxy component.

In a preferred embodiment, the epoxy component further comprises a multifunctional acrylate oligomer to increase the cure speed. The multifunctional acrylate oligomer preferably contains at least four groups of the formula:

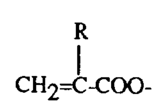

in which R is hydrogen or methyl, and is a polyether-acrylate, a polyester-acrylate, a polyester-urethane-acrylate, an epoxide-acrylate and, in particular, a urethane-acrylate.

Suitable acrylates which can be used are well known to those skilled in the art and are described in US patents 3,380,831, 3,297,745, 4,129,488 and 3,586,526 to 4,586,530. Products of this type are also available commercially. Urethane-acrylates are available, for example, under the trademark EBECRYL® (UCB, Belgium) or UVITHANE® (Morton Thiokol, USA). The urethane-acrylates are prepared, for example, by masking prepolymers having isocyanate groups with hydroxyalkyl acrylates. In general, the molecular weight of oligomers of this type is within the range from about 500 to 5000, preferably, about 1000 to 2000, but products of lower molecular weight and also higher molecular weight, i.e. up to about 10,000, can be used.

Preferred multifunctional acrylate oligomers are aromatic urethane-hexaacrylate, polyester-hexaacrylate and polyester-tetraacrylate.

The multifunctional acrylate oligomers are used in an amount ranging from about 3 to about 30 wt%, preferably about 5 to about 20 wt%, most preferably about 5 to about 15 wt% based upon the total weight of the epoxy component.

The epoxy resin component may also contain other conventional modifiers such as extenders, fillers and reinforcing agents, pigments, dyestuffs, organic solvents, plasticizers, tackifiers, rubbers, diluents, adhesion promoters, such as epoxy silane, and the like. As extenders, reinforcing agents, fillers and pigments which can be employed in the epoxy resin component according to the invention there may be mentioned, for example: glass fibers, glass balloons, boron fibers, carbon fibers, cellulose, polyethylene powder, polypropylene powder, mica, quartz powder, gypsum, antimony trioxide, bentones, talc, silica aerogel ("Aerosil"), fumed silica, wollastonite, silane treated wollastonite, lithopone, barite, calcium carbonate, titanium dioxide, carbon black, graphite, iron oxide, or metal powders such as aluminum powder or iron powder. The preferred fillers are fumed silica, wollastonite and silane treated wollastonite. It is also possible to add other usual additives, for example, agents for conferring thixotropy, flow control agents such as silicones, cellulose acetate butyrate, polyvinyl butyral, stearates and the like.

Preferably, the epoxy resin component includes one or more fillers selected from the group consisting of calcium carbonate, wollastonite, aluminum powder and quartz powder an amount ranging from about 5 to about 50 wt%, preferably about 10 to about 40 wt%, most preferably about to about 15 to about 35 wt% based upon the total weight of the epoxy component. More preferably, the epoxy component further comprises an epoxy silane as an adhesion promoter which provides the cured adhesive with resistance to moisture and is present in an amount of from about 0.10 to about 1.00 wt%, preferably about 0.25 to about 0.80 wt%, most preferably about 0.30 to about 0.70 wt% based upon the total weight of the epoxy component and fumed silica as a thixotropic control agent in an amount of from about 1.00 to about 10 wt%, preferably about 2 to about 7 wt%, most preferably about 3 to about 5 wt% based upon the total weight of the epoxy component.

The liquid elastomer component comprises

(a) a liquid copolymer based on butadiene and at least one ethylenically unsaturated comonomer,

(b) a liquid oligomer reaction product of a polyamine and a dimer acid and

(c) a liquid aromatic or aliphatic polyamine.

The liquid copolymer based on butadiene and at least one ethylenically unsaturated comonomer preferably contains end groups which react with epoxy resins. The molecular weight of these copolymers is preferably 500-5000 and most preferably 1000-3000.

The liquid copolymer based on butadiene can be used as such or as an adduct with an epoxy resin, preferably with a diglycidyl ether based on a bisphenol.

The term "liquid copolymer" encompasses compounds which are free-flowing at temperatures below 80°C and can be easily mixed with an epoxy resin.

Examples of polar, ethylenically unsaturated comonomers for the preparation of the liquid copolymer based on butadiene are (meth)acrylic acid, (meth)acrylic acid esters, for example, the methyl or ethyl esters, (meth)acrylamide, fumaric acid, itaconic acid, maleic acid or esters or half-esters thereof, for example the monomethyl or dimethyl esters, maleic or itaconic anhydride, vinyl esters, for example vinyl acetate, polar styrenes, for example ring-chlorinated or ring-brominated styrenes, or, in particular, acrylonitrile or methacrylonitrile.

In addition to polar, ethylenically unsaturated comonomers, non-polar, ethylenically unsaturated comonomers can be included, for example ethylene, propylene or, in particular, styrene or substituted styrenes such as vinyltoluene.

The copolymer can be a random copolymer, block copolymer or graft copolymer.

Especially preferred copolymers are liquid butadiene/acrylonitrile copolymers. Other most preferred copolymers are liquid butadiene/acrylonitrile copolymers containing functional groups which react with epoxy resins, for example carboxyl, hydroxyl or amino groups. Examples of such copolymers are acrylonitrile/butadiene

rubbers containing carboxyl, hydroxyl or amino groups, for example compounds of the HYCAR® type from Goodrich.

Preferred types of such rubbers contain the structural units of the following formula IIa to IId and the end groups G:

$-CH_2-CH=CH-CH_2-$ (IIa), 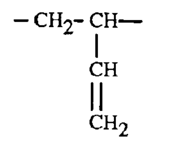 (IIb), 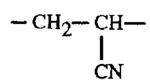 (IIc), 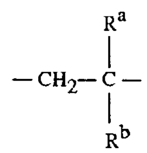 (IId),

wherein $R^a$ is hydrogen or methyl, $R^b$ is -COOH, -COOR$^c$ or -CONH$_2$, $R^c$ is an aliphatic radical, preferably methyl, and G is selected from the group comprising -R-COOH, -R-OH,

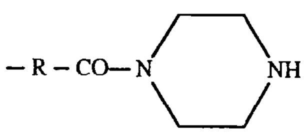 and 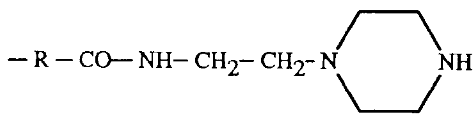 ,

wherein R is an alkylene radical; the proportion of radicals IIa, IIb and IIc is preferably 5-50% by weight and the proportion of radical IId is preferably 0-30% by weight or, in the case of radicals having free carboxyl groups, preferably 0-10% by weight, the amounts being based on the total amount of radicals IIa, IIb, IIc and, if appropriate, IId.

The copolymer is preferably used as the adduct of a butadiene/acrylonitrile copolymer containing functional groups which react with epoxy resins, and an epoxy resin. Such adducts are prepared in a manner known per se by heating the reactive butadiene/acrylonitrile rubber and the epoxy resin, if necessary with a catalyst, to form a fusible but still curable precondensation product. Examples of catalysts used are triphenylphosphine, tertiary amines, quaternary ammonium or phosphonium salts or chromium acetylacetonate.

The liquid copolymer is present in a range of from about 10 to about 80 wt%, preferably about 20 to about 70 wt%, most preferably about 30 to about 60 wt% based upon the total weight of the elastomer component.

Suitable liquid oligomer reaction products of a polyamine and a dimer acid include a hydrogenated polyaminoamide (VERSAMID 140, Henkel), a conventional polyamide (UNI-REZ 2188, Union Camp), VERSAMID 125 (Henkel), VERSAMID 115 (Henkel) and HY 840 (CIBA-GEIGY). Preferably, VERSAMID 140 (Henkel) is used. Polyamidoamines are prepared by dimerizing tall oil fatty acids and then reacting the dimerized acid with aliphatic amines such as diethylenetriamine. These oligomers are described by V. Brytus, Modern Paint and Coatings, Vol. 74, No. 10, p. 172 (1984).

The liquid oligomer reaction product of a polyamine and a dimer acid is present in a range of from about 3 to about 50 wt%, preferably about 5 to about 30 wt%, most preferably about 5 to about 20 wt% based upon the total weight of the elastomer component.

Suitable liquid aliphatic polyamines for use in the elastomer component include monoethanolamine, N-aminoethyl ethanol amine, ethylenediamine, hexamethylenediamine, trimethylhexamethylenediamine, diethylenetriamine, triethylenetetramine, tetraethylenepentamine, N,N-dimethylpropylenediamine- 1,3, N,N-diethylpropylenediamine- 1,3, bis(4-amino-3-methylcyclohexyl)methane, bis(p-aminocyclohexyl)methane, 2,2-bis(4-aminocyclohexyl)propane, N-aminoethyl-piperazine, 1,3-diaminocyclohexane, 1,4-diaminocyclohexane, 1,3-bis(aminomethyl)cyclohexane, isophorone diamine and 3,5,5-trimethyl-s-(aminomethyl)-cyclohexylamine.

Preferred liquid aliphatic polyamines include diethylenetriamine (DETA), triethylenetetramine (TETA), epoxy adduct of DETA, and epoxy adduct of TETA. Most preferably, epoxy adduct of DETA or epoxy adduct of TETA is used.

Suitable liquid aromatic polyamines include m-phenylene-diamine, p-phenylenediamine, bis(p-aminophenyl)methane, bis(p-aminophenyl)-sulfone, m-xylylenediamine, toluene diamine, 4,4'-methylene-dianiline, a diaminodiphenylether, benzidine, 4,4-thiodianiline, 4-methoxy-6-m-phenyldiamine, 2,6-diaminopyridine, dianisidine and 1-methyl-imidazole.

Preferred aromatic amines include m-phenylenediamine, p-phenylenediamine and bis(p-aminophenyl)sulfone. Most preferably, m-phenylenediamine or p-phenylenediamine is used.

The liquid aromatic or aliphatic polyamine is present in a range of from about 10 to about 40 wt%, preferably about 10 to about 30 wt%, most preferably about 10 to about 25 wt% based upon the total weight of the elastomer component.

The liquid elastomer component may also contain other conventional modifiers such as extenders, fillers and reinforcing agents, pigments, dyestuffs, organic solvents, plasticizers, tackifiers, rubbers, diluents, adhesion promoters, such as epoxy silane and 3-(triethoxysilyl)-1-propanamine, coupling agents and the like. As extenders, reinforcing agents, fillers and pigments which can be employed in the epoxy resin component according to the invention there may be mentioned, for example: glass fibers, glass balloons, boron fibers, carbon fibers, cellulose, polyethylene powder, polypropylene powder, mica, quartz powder, gypsum, antimony trioxide, bentones, talc, silica aerogel ("Aerosil"), fumed silica, wollastonite, silane treated wollastonite, lithopone, barite, calcium carbonate, titanium dioxide, carbon black, graphite, iron oxide, or metal powders such as aluminum powder or iron powder. The preferred fillers are fumed silica, wollastonite and aluminum powder. It is also possible to add other usual additives, for example, agents for conferring thixotropy, flow control agents such as silicones, cellulose acetate butyrate, polyvinyl butyral, stearates and the like.

Preferably, the liquid elastomer component includes one or more fillers selected from the group consisting of calcium carbonate, aluminum powder, quartz powder and wollastonite in an amount ranging from about 10 to about 50 wt%, preferably about 20 to about 40 wt%, most preferably about 25 to about 35 wt% based upon the total weight of the liquid elastomer component. More preferably, the liquid elastomer component further comprises a 3-(triethoxysilyl)-1-propanamine as an adhesion promoter which provides the cured adhesive with resistance to moisture and is present in an amount of from about 0.01 to about 0.50 wt%, preferably about 0.10 to about 0.40 wt%, most preferably about 0.10 to about 0.30wt% based upon the total weight of the liquid elastomer component; and fumed silica as a thixotropic control agent in an amount of from about 1 to about 10 wt%, preferably about 2 to about 8 wt%, most preferably about 3 to about 6 wt% based upon the total weight of the liquid elastomer component.

The mix ratio of the epoxy resin component to the liquid elastomer component is about 1 to about 2.0 by weight, preferably about 1 to about 1.90 by weight, most preferably about 1 to about 1.80 by weight.

A vertical type high-speed agitator, kneading machine, roll machine, ball mill or any other suitable mixing and agitating machine may be used for dispersion of the components of the composition of the present invention.

The invention also provides a method of bonding or sealing two surfaces together which comprises applying a composition of the invention to one or both surfaces, placing the two surfaces together with the composition positioned therebetween and, permitting the adhesive to cure at from about room temperature to about 125°C. Preferably, a room temperature cure is employed. This method may be used with surfaces of metal, such as steel or aluminum, plastic materials, glass, friction materials, such as brake linings, and ceramic materials.

The following examples serve to give specific illustrations of the practice of this invention but they are not intended in any way to limit the scope of this invention.

## EXAMPLE 1

This example illustrates the preparation, physical properties and mechanical properties of a typical composition of the present invention. The ingredients are listed in Table 1 and the physical and mechanical properties are listed in Table 2.

Table 1

Epoxy Resin Component

| Ingredient | Content (wt. %) |
|---|---|
| Epoxy novolac resin (EPN 1139 from CIBA-GEIGY Corp.) | 80.00 |
| Epoxy silane (A-187 from UNION CARBIDE) | 0.4 |
| Carbon Black | 0.04 |
| Calcium Carbonate | 16.0 |
| Fumed silica (CABOSIL® TS720 from Cabot Corp.) | 3.2 |
| *Diglycidyl ether of Bisphenol A | 0.360 |

*Added in order to provide the pigment with a paste-like consistency.

Elastomer Component

| Ingredient | Component (wt. %) |
|---|---|
| Polyamide of $C_{18}$ Fatty Acids (VERSAMID 150 from Henkel) | 7.56 |
| Modified aliphatic polyamine (Ancamine 2071 from Pacific Anchor) | 11.34 |
| Amino terminated acrylonitrile/butadiene copolymer (ATBN 1300x16 from B.F. GOODRICH) | 42.62 |
| Titanium Dioxide | 0.43 |
| Amino silane (Silane A-1100 from UNION CARBIDE) | 0.13 |
| Calcium Carbonate | 34.09 |
| Fumed silica (CABOSIL®TS720 from Cabot Corp.) | 3.83 |

The mix ratio of the epoxy resin component to the hardener component is 1/2 by volume.

The mix ratio of the epoxy resin component to the hardener component is 1/2 by volume.

Table 2

Physical Properties

| | | | |
|---|---|---|---|
| A. | Paste | Resin | Elastomer |
| | Color: | Black | Cream |
| | Viscosity/25°C [Pa·s] | 345.6 | 352.0 |
| | Specific Gravity | 1.347 | 1.242 |
| B. | Mixed Properties | | |
| | Mix Ratio | 1:2 by Volume<br>1:1.8 by Weight | |
| | Pot-Life (23±2°C) | 40 minutes (100 gram mass) | |
| | Sag Resistance:<br>(6 mm Bead, Vertical Position) | Non-Sag | |
| | Fixture Time (at 115°C) | 60-75 Seconds | |

Bulk Properties

| | |
|---|---|
| Tensile Strength (ASTM D-638) | 11.93 MPa |
| Elongation (ASTM D-638) | 30-40% |
| Break Energy (ASTM D-638) | 15.8 J |
| Glass Transition Temp. | 65-90°C |
| Flexural Modulus | 44.8 MPa |
| Hardness (Shore D) | 66 |

Examples 2-10

These examples illustrate the effect of the amine terminated acrylonitrile/butadiene copolymer on the adhesive system. The ingredients and mechanical properties are listed in Table 3.

TABLE 3
EFFECT OF ATBN 1300 X 16 ON MECHANICAL PROPERTIES

| Example No. | 2 | 3 | 4 | 5 | 6 | 7 | 8 | 9 | 10 |
|---|---|---|---|---|---|---|---|---|---|
| Resin: | (wt. in grams) | | | | | | | | |
| EPN 1139 | 100 | → | | | | | | | |
| Silane A-187 | 0.50 | → | | | | | | | |
| Black Color Paste | 0.50 | → | | | | | | | |
| $CaCO_3$ | 20.00 | → | | | | | | | |
| Cab-O-Sil TS720 | 4.00 | → | | | | | | | |
| Hardener | | | | | | | | | |
| ATBN 1300 X 16 | 20.00 | 30.00 | 40 | 50 | 60 | 70 | 80 | 90 | 100 |
| Versamid 150 | 21.16 | 20.76 | 20.30 | 19.88 | 19.44 | 19.02 | 18.16 | 18.16 | 17.74 |
| Ancamine 2071 | 31.76 | 31.12 | 30.46 | 29.88 | 29.16 | 28.54 | 27.24 | 27.24 | 26.60 |
| Silane A-1100 | 0.30 | → | | | | | | | |
| $CaCO_3$ | 60.00 | → | | | | | | | |
| $TiO_2$ | 1.00 | → | | | | | | | |
| Cab-O-Sil TS720 | 9.20 | → | | | | | | | |
| Properties | | | | | | | | | |
| Tensile Strength, [MPa] | 33.1 | 28.3 | 24.0 | 20.3 | 19.1 | 16.6 | 15.4 | 13.3 | 13.4 |
| Elongation [%] | 9 | 9 | 11 | 16 | 17 | 31 | 37 | 51 | 56 |
| FlexuralModulus [MPa] | -- | 641.5 | - | 360.2 | 154.0 | 137.4 | 87.1 | 64.3 | 68.7 |
| Break Energy [J] | 3.84 | 4.60 | 4.54 | 6.93 | 5.49 | 10.64 | 11.15 | 13.04 | 15.14 |
| Hardness, shore D | 85 | 83 | 82 | 77 | 76 | 73 | 70 | 69 | 65 |

## Example 11

This example further illustrates the preparation and mechanical properties of an additional composition of the present invention. The ingredients are listed in Table 4 and the mechanical properties are listed in Table 5. The cure speed to achieve handling strength at various temperatures are given in Table 6.

Table 4

Epoxy Resin Component

| Ingredient | Content (wt. %) |
| --- | --- |
| Epoxy novolac resin (EPN 1139 from CIBA-GEIGY Corp.) | 82.00 |
| Aromatic Urethane-hexaacrylate (EBECRYL 220 from Radcure Specialty Inc.) | 5.75 |
| Epoxy silane (A-187 from UNION CARBIDE) | 0.421 |
| Black Color Paste | 0.34 |
| Calcium Carbonate | 8.45 |
| Fumed silica(CABOSIL® TS720 from Cabot Corp.) | 3.04 |

Elastomer Component

| Ingredient | Component (wt. %) |
| --- | --- |
| Polyamide of $C_{18}$ Fatty Acids (VERSAMID 150 from Henkel) | 7.56 |
| Modified aliphatic polyamine (Ancamine 2071 from Pacific Anchor) | 11.34 |
| Amino terminated acrylonitrile/butadiene copolymer (ATBN 1300x16 from B.F. GOODRICH) | 42.62 |
| Titanium Dioxide | 0.43 |
| Amino silane (Silane A-1100 from UNION CARBIDE) | 0.13 |
| Calcium Carbonate | 34.09 |
| Fumed silica (CABOSIL®TS720 from Cabot Corp.) | 3.83 |

The mix ratio of the epoxy resin component to the hardener component is 1/2 by volume.

Table 5

Lap Shear Strength
on Automotive Grade Sheet Molding Compound

| | MPa |
|---|---|
| Room Temperature | 4.1 |
| 82°C | 2.8 |
| -30°C | 4.0 |
| 7 days Water Soak (Wet) | 3.1 |
| 7 days Water Soak (Dry) | 2.8 |
| Exterior Cycle* | 2.6 |
| Scab Cycle** | 2.6 |
| Humidity Cycle*** | 2.1 |
| 70°C Heat Aging**** | 3.8 |

*Exterior Cycle, 30 cycles, 6 weeks:

Expose samples to the following conditions:

- 16 hours humidity
- 2 hours - 30°C
- 2 hours room temperature
- 2 hours 70°C
- 2 hours Neutral Salt Spray

These series constitute one cycle.

**Scab Cycle, 20 cycles, 4 weeks:

Expose samples to the following conditions:

Mondays Only

- 1 hour 60°C
- 30 minutes - 30°C
- 15 minutes immersion in 5% NaCl solution
- 75 minutes room temperature
- 21 hours humidity

Tuesday through Friday

- 15 minutes immersion in 5% NaCl solution
- 75 minutes room temperature
- 22 hours and 30 minutes humidity

Saturdays and Sundays - 48 hours humidity.

***Humidity Cycle, 8 weeks:

Expose samples to condensing humidity at 38°C for 8 weeks.

****70°C Heat Aging:

Expose samples at 70°C for 8 weeks.

Table 6

Cure Speed

| Temperature/°C | Time in Fixture/seconds |
| --- | --- |
| 82 | 113 |
| 93 | 80 |
| 104 | 60 |
| 116 | 44 |
| 127 | 40 |
| 138 | 36 |
| 149 | 36 |

Bondline: 25 mm · 0.8 mm
Substrate: Phase Alpha SMC
Specimens: Cross Peel Test

**Claims**

**1.** A two component epoxy resin adhesive system comprising
(A) an epoxy component comprising
(a) at least one aromatic multifunctional epoxy resin, and
(B) a liquid elastomer component comprising
(a) a liquid copolymer based on butadiene and at least one ethylenically unsaturated comonomer,
(b) a liquid oligomer reaction product of a polyamine and a dimer acid and
(c) a liquid aromatic or aliphatic polyamine.

2. A two component epoxy resin adhesive system according to claim 1 wherein said aromatic multifunctional epoxy resin is N,N,O-triglycidyl-4-aminophenol, N,N,N′,N′-tetraglycidyl derivative of methylene dianiline, an epoxidized novolak, an epoxidized bisphenol A resin, epoxidized resorcinol, epoxidized bisphenol F or a mixture thereof.

3. A two component epoxy resin adhesive system according to claim 1 wherein said aromatic multifunctional epoxy resin is the epoxidation products of cresol novolacs or phenol novolacs.

4. A two component epoxy resin adhesive system according to claim 1 wherein said aromatic multifunctional epoxy resin is present in an amount of from about 50 to about 100 wt%, based upon the total weight of the epoxy component.

5. A two component epoxy resin adhesive system according to claim 1 wherein said epoxy component further comprises an aliphatic multifunctional epoxy resin.

6. A two component epoxy resin adhesive system according to claim 5 wherein said aliphatic multifunctional epoxy resin is diglycidylesters of cyclohexane-1,2-dicarboxylic acid, trimethylol ethane triglycidyl ether or trimethylol propane triglycidyl ether.

7. A two component epoxy resin adhesive system according to claim 1 wherein said epoxy component further comprises a multifunctional acrylate oligomer.

8. A two component epoxy resin adhesive system according to claim 7 wherein said multifunctional acrylate oligomer contains at least four groups of the formula

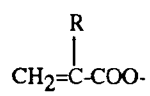

in which R is hydrogen or methyl.

9. A two component epoxy resin adhesive system according to claim 7 wherein said multifunctional acrylate oligomer is a polyether-acrylate, a polyester-acrylate, a polyester-urethane-acrylate, an epoxide-acrylate or a urethane-acrylate.

10. A two component epoxy resin adhesive system according to claim 7 wherein said multifunctional acrylate oligomer is present in an amount of from about 3 to about 30 wt%, based on the total weight of the epoxy component.

11. A two component epoxy resin adhesive system according to claim 1 wherein said ethylenically unsaturated comonomer is (meth)acrylic acid, (meth)acrylic acid ester, (meth)acrylamide, fumaric acid, itaconic acid, maleic acid or esters or half-esters thereof, maleic or itaconic anhydride, vinyl esters, styrenes, substituted styrenes, acrylonitrile, methacrylonitrile, ethylene or propylene.

12. A two component epoxy resin adhesive system according to claim 1 wherein said liquid copolymer is a liquid butadiene/acrylonitrile copolymer.

13. A two component epoxy resin adhesive system according to claim 1 wherein said liquid copolymer is a liquid butadiene/acrylonitrile copolymer containing functional groups which react with epoxy resins.

14. A two component epoxy resin adhesive system according to claim 1 wherein said liquid copolymer is present in an amount of from about 10 to about 80 wt%, based on the weight of the elastomer component.

15. A two component epoxy resin adhesive system according to claim 1 wherein said liquid oligomer is a hydrogenated polyaminoamide or a polyamide.

16. A two component epoxy resin adhesive system according to claim 1 wherein said liquid copolymer is present in an amount of from about 3 to about 50 wt%, based on the weight of the elastomer component.

17. A two component epoxy resin adhesive system according to claim 1 wherein said liquid aliphatic polyamine is monoethanolamine, N-aminoethyl ethanol amine, ethylenediamine, hexamethylenediamine, trimethylhexamethylenediamine, diethylenetriamine, triethylenetetramine, tetraethylenepentamine, N,N-dimethylpropylenediamine-1,3, N,N-diethylpropylenediamine-1,3, bis(4-amino-3-methylcyclohexyl)methane, bis(p-aminocyclohexyl)methane, 2,2-bis(4-aminocyclohexyl)propane, N-aminoethyl-piperazine, 1,3-diaminocyclohexane, 1,4-diaminocyclohexane, 1,3-bis(aminomethyl)cyclohexane, isophorone diamine or 3,5,5-trimethyl-s-(aminomethyl)-cyclohexylamine.

18. A two component epoxy resin adhesive system according to claim 1 wherein said liquid aromatic polyamine is m-phenylene-diamine, p-phenylenediamine, bis(p-aminophenyl)methane, bis(p-aminophenyl)-sulfone, m-xylylenediamine, toluene diamine, 4,4′-methylene-dianiline, a diaminodiphenylether, benzidine, 4,4-thiodianiline, 4-methoxy-6-m-phenyldiamine, 2,6-diaminopyridine, dianisidine or 1-methyl-imidazole.

19. A two component epoxy resin adhesive system according to claim 1 wherein said liquid aromatic or aliphatic polyamine is present in an amount of from about 10 to about 40 wt%, based on the liquid elastomer component.

European Patent Office

# EUROPEAN SEARCH REPORT

Application Number

EP 92810598.0

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP - A - 0 353 190 (CIBA GEIGY) * Claims 1,2,4-6,10,15,16; page 9, lines 11-36; page 7, line 12 - page 8, line 29 * ---- | 1-3,5, 6, 11-13, 15 | C 09 J 163/00<br>C 08 L 63/00<br>//(C 09 J 163/00<br>C 09 J 147:00)<br>(C 09 J 163/00<br>C 09 J 179:02) |

TECHNICAL FIELDS SEARCHED (Int. Cl.5)

C 09 J
C 08 G
C 08 L

The present search report has been drawn up for all claims

| Place of search | Date of completion of the search | Examiner |
|---|---|---|
| VIENNA | 23-11-1992 | BÖHM |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)